# EUROPÄISCHE PATENTSCHRIFT

(11) **EP 2 698 301 B1**
(45) Veröffentlichungstag und Bekanntmachung des Hinweises auf die Patenterteilung: **13.12.2017**
(21) Anmeldenummer: 13003140.4
(22) Anmeldetag: 20.06.2013
(51) Int. Cl.: B62D 1/19

(54) **Kraftfahrzeug mit versenkbarem Lenkrad**
Motor vehicle with retractable steering wheel
Véhicule automobile avec volant abaissable

(30) Priorität: 25.07.2012 DE 102012014762
(43) Veröffentlichungstag der Anmeldung: 19.02.2014
(73) Patentinhaber: AUDI AG, 85045 Ingolstadt (DE)
(72) Erfinder: Stadler, Michael, DE - 85110 Arnsberg (DE); Schütz, Ingo, DE - 85253 Erdweg (DE)
(74) Vertreter: Thielmann, Frank

(56) Entgegenhaltungen:
- EP-A2- 1 283 146
- EP-A2- 1 361 137
- WO-A1-2005/085012
- DE-A1- 19 829 239
- US-A- 3 481 626
- US-A- 5 295 712
- US-A1- 2004 012 186
- US-B1- 6 463 372

## Beschreibung

Die Erfindung betrifft ein Kraftfahrzeug mit einem Lenkrad nach dem Oberbegriff des unabhängigen Anspruchs 1.

Kraftfahrzeuge werden zunehmen mit einer "Steer-by-wire"-Lenkung ausgerüstet, bei der eine mechanische oder hydraulische Entkoppelung von Lenkrad bzw. Lenksäule und Rädern des Fahrzeugs vorgesehen ist. Mit dieser "Steer-by-wire" Technik kann nicht nur Gewicht durch Einsparung verschiedener Bauteile der Lenkeinrichtung des Fahrzeugs eingespart werden, sondern auch ein sogenannter Autopilot vorgesehen werden. Der Autopilot ermöglicht ein pilotiertes Fahren des Fahrzeugs, wodurch ein Fahrzeuglenker nicht mehr aktiv das Fahrzeug lenken muss. Beim pilotierten Fahren kann der Fahrzeuglenker sich somit anderen Dingen widmen, die ihm ein entspanntes und störungsfreies Fahren ermöglichen.

Es sind bereits Fahrzeuge aus dem Stand der Technik bekannt, bei denen das Lenkrad beim pilotierten Fahren in eine zurückgezogene Position in einer Instrumententafel bzw. Armaturentafel versenkbar ist. Durch das Versenken des Lenkrads mitsamt der Lenksäule steht für den Fahrzeuglenker mehr Platz zur Verfügung, wie es beispielsweise auf einer Beifahrerseite üblich ist.

Aus der Druckschrift DE 10 2006 006 995 A1 ist ein Kraftfahrzeug mit einem Lenkrad bekannt, das bei selbstständigem Fahrbetrieb - in einem Autopilotmodus - automatisch eine geometrisch kleine Form einnimmt und in eine zurückgezogene Position in einer Instrumententafel bzw. Armaturentafel versenkbar ist, woraus zwangsläufig resultiert, dass das Lenkrad weniger Raum einnimmt und folglich der Fahrer nicht so leicht unbeabsichtigt an das Lenkrad stoßen kann. Wenn der Fahrer selbst lenken muss oder aus dem automatischen Lenkbetrieb heraus schnell die Lenkkontrolle selbst übernehmen muss, wird das Lenkrad automatisch wieder in eine geometrisch große Form zurückgestellt.

Aus weiteren Druckschriften, wie beispielsweise den DE 198 44 412 A1, DE 199 07 360 A1, DE 100 53 182 A1 sowie DE 42 25 671 A1 und DE 43 22 925 A1 sind längs-verschiebbare Sicherheitssäulen für PKW bekannt, die bei einem Unfall eine Verletzungsgefahr für einen Gesicht-Schädelbereich eines Fahrers mindern, indem sie eine zusammenschiebbare Sicherheitslängssäule vorsehen, bei der mittels eines Aktors eine obere bewegliche Längssäule in Richtung von einem Fahrer weg, zum Armaturenbrett hin eingeschoben wird.

Eine weitere Sicherheitseinrichtung für Fahrzeuge offenbart die Offenlegungsschrift DE 38 03 401 A1, bei der im Falle einer gegebenen Verzögerung bei einem Frontalaufprall eine Sperrkupplung gelöst wird, wobei eine obere Längssäule mit einem Lenkrad frei in eine untere Längssäule eintauchen kann, in einer Richtung vom Fahrer weg. Dabei sind Mittel vorgesehen die einen Kopfaufprall weich und definiert abfangen und dabei einer übermäßigen Kopfrotation mit einer nachteiligen Überdehnung der Halswirbelsäule entgegenwirken.

Weitere Druckschriften, wie die WO 2005/030558 A1 sowie die WO 00/58132 offenbaren Sicherheitssysteme bei denen ein Lenkrad im Falle eines Frontalaufpralls um einen festen Drehpunkt verkippbar ist, so dass das Lenkrad in eine bestimmte, für den Fahrer ungefährliche Position ausgelenkt werden kann.

In der EP 1 361 137 A2 ist eine Sicherheitslenkung für ein Kraftfahrzeug beschrieben. Die Sicherheitslenkung umfasst eine Lenksäule und eine Sicherheitseinrichtung. Die Sicherheitseinrichtung ist dazu ausgelegt, in einer Unfallsituation des Kraftfahrzeugs einen Lenksäulenendbereich der Lenksäule von einer Fahrerposition wegzubewegen.

Aus der US 2004/0012186 A1 geht eine Lenkradanordnung in einem Motorfahrzeug hervor. In der Lenkadanordnung ist eine mit einem Lenkrad versehene Lenksäule in einem Halter drehbar gehalten. Das Lenkrad ist zusammen mit einem ersten Abschnitt der Lenksäule so konstruiert, dass es im Fall einer Kollision durch eine auf den ersten Abschnitt der Lenksäule wirkende Antriebsvorrichtung aus einer normalen Stellung zu einer näher zum Fahrer des Fahrzeugs gelegenen Aufprallstellung bewegt wird. Dazu weist die Antriebsvorrichtung eine Arbeitskammer auf, welche auf den ersten Abschnitt der Lenksäule einwirkt. Mit der Arbeitskammer ist ferner ein Gasgenerator verbunden, welcher im Fall einer Kollision aktiviert wird, um ein Treibgas an die Arbeitskammer abzugeben, wodurch der erste Abschnitt der Lenksäule und das Lenkrad zu der näher zum Fahrer des Fahrzeugs gelegenen Aufprallstellung bewegt werden.

In der WO 2005/085012 A1 ist eine Sicherheitseinrichtung für ein Kraftfahrzeug beschrieben. Die Sicherheitseinrichtung umfasst einen durch einen Sitzverstellantrieb in seiner Sitzposition verstellbaren Fahrersitz und ein durch einen Lenkradverstellantrieb in seiner Lenkradposition einstellbares Lenkrad. Ferner umfasst die Sicherheitseinrichtung eine Steuereinheit, welche die für einen Fahrbetrieb sicherheitsrelevanten Daten auswertet und den Lenkradverstellantrieb zeitlich so ansteuert, dass vor dem Eintritt eines zu erwartenden Unfallereignisses eine Bewegung des Lenkrads in Abhängigkeit von der aktuellen Sitzposition des Fahrersitzes in eine für den Fahrer sicherheitstechnisch optimale Lenkradposition eingeleitet wird.

Aus der US 6 463 372 B1 geht ein Schadensreduzierungssystem für Fahrzeugkollisionen hervor. Das System arbeitet durch Erfassen einer Relativgeschwindigkeit zwischen dem Fahrzeug und einem Objekt, beispielsweise einem anderen Fahrzeug. Eine Gefahrenstufe wird auf der Grundlage von Parametern, wie der Geschwindigkeit und dem Abstand zum Objekt bestimmt. Das Schadensreduzierungssystem umfasst einen Airbag, welcher in einem Lenkrad integriert ist.

In der US 3 481 626 A und in der US 5 295 712 A ist eine Schutzeinrichtung für einen Fahrer eines Kraftwagens beschrieben. Die Schutzeinrichtung ist dazu ausgebildet, beim Erfassen einer bevorstehenden Kollision ein Lenkrad von dem Fahrer wegzubewegen.

In der DE 198 29 239 A1 ist eine Lenkvorrichtung mit einem im Crashfall in Fahrzeugfrontrichtung verschiebbaren Lenkrad beschrieben. Dazu umfasst die Lenkvorrichtung eine Verschiebevorrichtung, mit der das Lenkrad im Fahrzeugbetrieb in einer bestimmten Verstellposition festgelegt ist und im Crashfall in Fahrzeugfrontrichtung verschiebbar ist.

Beim Versenken des Lenkrads ist es jedoch notwendig, ein anderes Airbag-System auf der Fahrerseite vorzusehen, das ähnlich der Beifahrerseite gestaltet ist, da der für gewöhnlich in dem Lenkrad vorgesehene Airbag bei einem versenkten Lenkrad zu klein wäre, den Fahrer entsprechend zu schützen. Es ist deshalb vorgesehen, nicht nur in dem Lenkrad einen Airbag vorzusehen, sondern auch in der Armaturentafel, der dann eine entsprechend größere Form aufweist. Dieses bedeutet aber, dass stets zwei Airbags für den Fahrer vorgesehen sein müssen, wenn das Lenkrad versenkt werden kann. Bei einem Crash muss dann entweder der Airbag des Lenkrads gezündet werden, wenn der Fahrer das Fahrzeug manuell lenkt und im Fall des pilotierten Fahrens muss der in der Instrumententafel angeordnete Airbag gezündet werden.

Es ist deshalb eine Aufgabe der vorliegenden Erfindung ein Kraftfahrzeug der eingangs genannten Art weiterzuentwickeln, das mit nur einem Airbag auskommt.

Ein Kraftfahrzeug zur Lösung der erfinderischen Aufgabe weist die Merkmale des unabhängigen Anspruchs 1 auf. Danach wird ein Kraftfahrzeug mit einer Instrumententafel und einem auf einer Lenksäule angeordneten Lenkrad vorgeschlagen, das im Bereich der Instrumententafel angeordnet ist, wobei das Lenkrad relativ zur Instrumententafel beweglich ist und in einer Längsrichtung der Lenksäule in Richtung der Instrumententafel von einer ersten Position in eine zweite Position verschiebbar ist, wobei bei einer unfallbedingten Kraftbeaufschlagung des Kraftfahrzeugs die Lenksäule derart ausgebildet ist, dass das Lenkrad aus der zweiten Position in die erste Position verschoben wird. Durch die Verschiebung des Lenkrads zurück in die erste Position des manuellen Lenkens braucht nur ein Airbag für den Fahrer vorgesehen zu sein, da in jedem Fall das Lenkrad in einer Position steht, in der der Airbag in dem Lenkrad genügend Sicherheit für den Fahrer bedeutet. Durch die ebenfalls auch Unfall-Position des Lenkrads genannte erste Position kann der Fahrer sehr viel besser und auch schneller in das Rückhaltesystem des Fahrzeugs eingebunden werden. Es kann dabei vorgesehen sein, dass das Kraftfahrzeug eine Ansteuervorrichtung aufweist, die derart ausgebildet ist, aufgrund eines Ereignisses die Verschiebung des Lenkrads zu veranlassen. Vorzugsweise löst ein Signal eines Unfallsensors das Verschieben der Lenksäule aus. Mit dem Merkmal "bei einer unfallbedingten Kraftbeaufschlagung" ist auch eine zeitlich vor der unfallbedingten Kraftbeaufschlagung Situation mit umfasst. Mit bekannten Notbremsassistenten können unfallbedingte Kraftbeaufschlagungen mittels einer Sensoreinrichtung mit einer sehr hohen Wahrscheinlichkeit erkannt werden, weshalb die Bedingung, dass ein Unfall bzw. die Kraftbeaufschlagung unmittelbar bevorsteht, mit eingeschlossen ist. Das heißt soviel, dass nicht nur beim Ereignis des Unfalls die Lenksäule in die erste Position verschoben wird, sondern auch wenn durch die Sensoreinrichtung bei Erfüllung wenigstens eines Parameters ein bevorstehender Unfall erkannt wird.

Weiterhin ist die Lenksäule mit einem Aktor gekoppelt, der so ausgelegt ist, das Lenkrad aus der zweiten Position in die erste Position zu verschieben. Mit dem Aktor kann insbesondere das Lenkrad in sehr kurzer Zeit in die gewünschte Position gebracht werden, in der das Lenkrad dem Airbag ein Widerlager bildet, wenn der Fahrer in den Airbag eintaucht. Der Aktor kann deshalb in kürzester Zeit die Lenksäule in ihrer Längserstreckung aus der Instrumententafel herausbewegen.

Erfindungsgemäß weist der Aktor eine Federeinrichtung auf, die in der zweiten Position des Lenkrads unter einer Vorspannung ist und im Fall des Unfalls entriegelbar ist. Eine Federeinrichtung weist unter Vorspannung kinetische Energie auf, die ausreicht die Lenksäule in eine Unfallposition im Falle des Unfalls zu bewegen. Mit einer Federeinrichtung bedarf es im Falle des Unfalls lediglich der Entriegelung der Federeinrichtung und ansonsten keiner weiteren von außen eingetragener Energie. Die Unfallposition entspricht im Wesentlichen der Position des manuellen Lenkens.

Gemäß einer bevorzugten Ausführungsform der Erfindung kann es vorgesehen sein, dass das Lenkrad aus der zweiten Position in die erste Position innerhalb einer Zeitspanne verschiebbar ist, die insbesondere einer Zeit entspricht, in der ein in dem Lenkrad integrierter Airbag zur wenigstens teilweisen Entfaltung benötigt. Hierdurch kann die Ankopplung des Fahrers und das Rückhaltesystem in optimaler Weise erfolgen, da durch das Vorziehen des Lenkrads die sogenannte Unfall-Position im Abstand zwischen einem festen Widerlager und dem Fahrer in einer Fahrposition verkürzt werden kann. Ebenso kann die Zeitspanne einer Zeit entsprechen, in der eine Person einen Weg von einer Fahrposition in eine Aufprallposition mit einem zumindest teilweise entfalteten Airbag des Lenkrads zurücklegt.

Nach einer Weiterbildung der Erfindung kann das Lenkrad in einer Zehntelsekunde und weniger, bevorzugt innerhalb von 10 bis 100 Millisekunden, besonders bevorzugt innerhalb von 20 bis 50 Millisekunden, von der zweiten in die erste Position verschiebbar sein. Das entspricht im Wesentlich der Zeit, in der der Airbag in dem Lenkrad zur Entfaltung benötigt.

Ebenfalls kann das Lenkrad in die Unfallposition in der Weise bewegt werden, wenn der Aktor ein Pyroelement ist. Ähnlich der Vorrichtung zur Entfaltung des Airbags kann der Aktor in Form eines Pyroelements vorgesehen sein, das den Vorteil aufweist, dass das Herausschnellen der Lenksäule aus der Instrumententafel in etwa der gleichen Zeit erfolgt, wie der Airbag sich entfaltet.

Ferner kann der Aktor ein Linearmotor sein, der in der Längsrichtung mit der Lenksäule verbunden ist. Mit einem Linearmotor ist es leicht möglich, die Lenksäule entlang ihrer Längserstreckung aus der Instrumententafel zu bewegen, wobei hierfür die Lenksäule wenigstens eine Spule aufweisen kann, die durch seitlich zur Lenksäule angeordneten Magneten verschoben werden kann.

Des Weiteren kann der Aktor ein Pneumatik- und/oder Hydraulikzylinder sein. Hierbei ist insbesondere die Lenksäule als Kolben des Zylinders ausgeführt, der im Falle des Unfalls durch eine Hydraulikflüssigkeit oder durch ein in den Zylinder eingebrachtes Gas aus dem Zylinder herausgepresst wird.

Damit der Airbag ein festes Widerlager in der Unfallposition des Lenkrads aufweist, kann die Lenksäule in einer Endposition, insbesondere der Position des manuellen Lenkens feststellbar sein, insbesondere arretierbar sein. Durch die vorstehend genannten Ausführungsbeispiele des Aktors kann es zusätzlich erforderlich sein, die Lenksäule zu arretieren, damit die Lenksäule beim Aufprall des Fahrers in den Airbag nicht nachgeben kann.

Nach einer anderen Weiterbildung kann es auch vorgesehen sein, dass in der ersten Position die Lenksäule oder zumindest ein Teil der Lenksäule nachgiebig gelagert ist. Die Lenksäule kann auch noch eine Aufprallenergie des Fahrers auf das Lenkrad aufnehmen, in dem sie in Längserstreckung nachgibt. Dabei kann die Lenksäule derart ausgelegt sein, dass sie einen definierten Weg zurücklegt, wodurch eine bessere Ankoppelung des Fahrers in das Rückhaltesysteme ermöglicht wird.

Weitere vorteilhafte Ausgestaltung der Erfindung sind in den Unteransprüchen wiedergegeben.

Ein bevorzugtes Ausführungsbeispiel wird nachfolgend anhand der Zeichnung näher erläutert. Diese zeigen in:
- Fig. 1: eine beispielhafte Seitenansicht einer Lenksäulenanordnung in einem vorderen Bereich eines Kraftwagens,
- Fig. 2: eine Lenksäule gemäß einem ersten Ausführungsbeispiel,
- Fig. 3: eine Lenksäule gemäß einem zweiten Ausführungsbeispiel, und
- Fig. 4: eine Lenksäule gemäß einem dritten Ausführungsbeispiel.

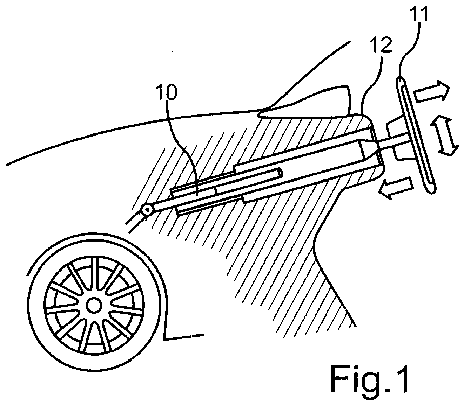

In der Fig. 1 ist in einer seitlichen Darstellung eine Lenksäuleanordnung eines Kraftfahrzeugs gezeigt, die eine Lenksäule 10 und ein darauf angeordnetes Lenkrad 11 aufweist. Das Fahrzeug ist elektrisch lenkbar. Eine solche "Steer-by-wire"-Lenkung bietet einige Vorzüge gegenüber den konventionellen Lenkungen. Dennoch weisen auch "Steer-by-wire"-Lenkungen aus Sicherheitsgründen noch eine rein mechanische oder hydraulische Koppelung des Lenkrads 11 mit einer Lenkachse bzw. den gelenkten Rädern auf.

Ein Vorzug der "Steer-by-wire"-Lenkung, der sich gegenüber der konventionellen Lenkung bietet, liegt zu allererst in einer Gewichtsersparnis begründet, da man an und für sich auf ein Lenkgestänge weitestgehend verzichten kann. Mit der "Steer-by-wire"-Lenkung ist darüber hinaus ein pilotiertes Fahren des Fahrzeugs auch sehr viel einfacher durchführbar, da hierbei nicht das komplette Lenkgestänge betätigt werden muss. Ein hierfür vorgesehener Motor zum Lenken der Räder kann im Bereich der Räder bzw. Aufhängung angeordnet sein, wobei jedes Rad mit einem eigenen Motor einzeln ansteuerbar ist. Trotz dieser Vorteile ist es vom Gesetzgeber nach wie vor vorgesehen, die mechanische bzw. hydraulische Koppelung zwischen Lenkrad und Räder vorzuhalten.

Das Lenkrad wird aber gerade bei einer pilotierten Fahrweise nicht benötigt, weshalb es während der pilotierten Fahrt in einer Armaturentafel 12 versenkbar ist. Es ist bekannt, das Lenkrad 11 an einen Fahrer und dessen Fahrposition anzupassen, wofür es sowohl in vertikaler Richtung als auch in einer Längsrichtung der Lenksäule 10 verstellbar ist.

Bei dem Versenken des Lenkrads 11 in der Armaturentafel 12 handelt es sich jedoch um eine weitergehende Funktion, bei der das Lenkrad 11 soweit in Richtung der Armaturentafel 12 geschoben wird, bis es nahezu auf dieser aufliegt oder zumindest in einem Bereich der Armaturentafel 12 angeordnet ist. Das Versenken des Lenkrads 11 ist dem Fachmann als solches ebenfalls bekannt, weshalb hier nicht auf Einzelheiten eingegangen zu werden braucht.

Sobald der Fahrer das Fahrzeug in einem Automodus fährt, wenn also das Fahrzeug ohne ein aktives Lenken des Fahrers betrieben und gelenkt wird, kann der Fahrer das Lenkrad in eine zurückgezogene Position des automatischen Lenkens versenken, die im Gegensatz zur Position des aktiven oder manuellen Lenkens auch als zweite Position bezeichnet werden kann. Die Position des aktiven Lenkens ist demnach die erste Position des Lenkrads. Dabei wird der Fahrer zuerst das Fahrzeug manuell lenken und in einem zweiten Schritt in das automatische Lenken übergehen. Beim automatischen Lenken bedarf es dann keines aktiven Eingreifens des Fahrers, weshalb auch das Lenkrad keine aktuellen Nutzen hat. Es kann also, um dem Fahrer mehr Raum zu geben, in die zweite Position versenkt werden, wobei diese Position auch als Automatikposition bezeichnet werden kann.

In der zweiten Position ist das Lenkrad 11 vorzugsweise in einer neutralen Stellung, in der die Räder, wenn sie mit dem Lenkrad 11 mechanisch gekoppelt wären, in einem Geradeauslauf stehen. In der zweiten Position ist das Lenkrad 11 und vorzugsweise auch die Lenksäule 10 von einem Lenkvorgang in einem "Steer-by-wire"-Modus entkoppelt. Das heißt, dass das Lenkrad 11 nicht mitdreht, auch wenn die Räder gelenkt werden.

Es ist vorgesehen, dass das Lenkrad 11 einen Airbag in an sich bekannter Anordnung aufweist. Das heißt, dass im Falle eines Unfalls der Airbag aus dem Lenkrad 11 herauskommt, um den Fahrer zu schützen. Damit der Airbag jedoch nicht zu tief angeordnet ist, wenn das Fahrzeug im Auto-Modus betrieben wird und das Lenkrad versenkt ist, ist es vorgesehen, dass mit dem Entfalten des Airbags das Lenkrad 11 aus der zurückgezogenen Position in eine andere vorbestimmte Position bewegt wird. Diese vorbestimmte Position entspricht im Wesentlich der ersten Position, in der das Fahrzeug aktiv gelenkt wird und kann auch als Unfallposition bezeichnet werden. Das Lenkrad 11 wird demnach mit hoher Geschwindigkeit in die Unfallposition im Falle eines Unfalls, insbesondere eines Frontalunfalls, bewegt. Die Bewegung muss sehr schnell erfolgen, vorzugsweise in der gleichen Geschwindigkeit, in der sich der Airbag entfaltet und/oder der Fahrer in den zumindest teilweise entfalteten Airbag eintaucht. Durch das vorstehende Lenkrad 11 kann der Fahrer schneller und besser an ein Rückhaltesystem des Fahrzeugs angekoppelt werden, wodurch Energie besser abgebaut werden kann, um den Fahrer besser zu schützen.

Mit der vorstehenden Erklärung, dass das Lenkrad im Falle eines Unfalls aus der zweiten in die erste Position verschoben wird, ist auch die Möglichkeit mit eingeschlossen, dass das Fahrzeug über eine Unfallerkennungsvorrichtung bzw. einen Notbremsassistenten verfügt, die einen bevorstehenden Unfall mittels einer Sensoreinrichtung erkennt. Solche Unfallerkennungsvorrichtungen sind bekannt, weshalb nicht näher auf solche Systeme an dieser Stelle eingegangen zu werden braucht. Die Unfallerkennungsvorrichtung kann ein mit einer hohen Wahrscheinlichkeit eintretendes Unfallereignis erkennen, wobei die Sensoreinrichtung derart ausgelegt ist, den Eintritt eines oder mehrerer Parameter zu messen, wodurch der zeitlich bevorstehende Unfall ermittelt werden kann. Durch die Erkennung eines bevorstehenden Unfallereignisses kann die Lenksäule mit dem Lenkrad auf den Unfall vorbereitet werden und entsprechend früher in die Unfallposition verschoben werden, wodurch sich ein zeitlicher Vorteil ergibt.

Es ist deshalb auch vorgesehen, das Lenkrad 11 wenigstens sekundenschnell in die vorbestimmte Position zu bewegen, damit die Anbindung des Fahrers in das Rückhaltesystem vollzogen werden kann. Bevorzugt ist hierfür ein Zeitspanne im Zehntelsekunden- und besonders bevorzugt im Millisekundenbereich vorgesehen. Das heißt, dass in wenigen Millisekunden das Lenkrad 11 aus der zurückgezogenen Position in die Unfallposition gebracht wird.

Hierfür ist der Lenksäule 10 ein Aktor zugeordnet. Der Aktor weist im Wesentlichen die Aufgabe auf, die Lenksäule 10 bei einem Unfall in der vorbestimmten Zeitspanne auseinander zu schieben bzw. das Lenkrad 11 in die Position des manuellen Lenkens zu bewegen. Da das Auseinanderschieben der Lenksäule 10 sehr schnell erfolgt, sind unterschiedliche Ausführungsformen des Aktors denkbar, die jeweils durch unterschiedliche Mittel eine entsprechende Kraft aufbringen können. Der Aktor ist dabei vorzugsweise mit einem ausfahrbaren Teil der Lenksäule 10 verbunden, so dass dieser Teil aus der Armaturentafel 12 herausbewegt wird. Darüber hinaus kann die Lenksäule 10 auch Teil des Aktors sein.

Wie vorstehend beschrieben, kann die Lenksäule 10 auch in ein Notbremssystem integriert sein, was soviel bedeutet, als dass der Aktor mehr Zeit zum Verschieben des Lenkrads 11 aus der zweiten in die erste Position hat, als dass der Airbag zur Entfaltung benötigt, da das Lenkrad 11 somit bereits vor dem Ereignis des Unfalls, wenn also durch eine unfallbedingte Kraftbeaufschlagung die Sensoreinrichtung tatsächlich eine Deformation des Fahrzeugs feststellt, verschoben werden kann.

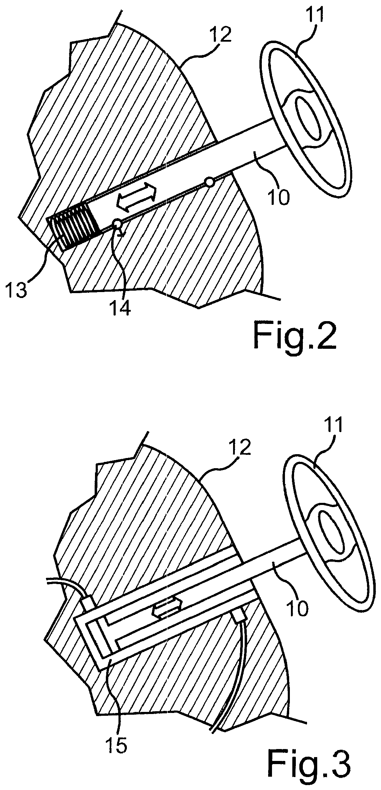

In einer ersten Ausführungsform nach Fig. 2 ist der Aktor im Wesentlichen ein Federelement 13, das in der zweiten Position des Lenkrads 11 unter einer Vorspannung steht. Eine in dem Federelement enthaltene kinetische Energie reicht aus, das Lenkrad 11 in wenigen Millisekunden in die gewünscht Position zu bewegen. Sobald das Lenkrad 11 in die zweite Position gebracht wird, wird das Federelement 13 gespannt. Dabei drückt beispielsweise, wie auch in der Fig. 2 dargestellt ist, die Lenksäule 10 das Federelement 13 zusammen, wodurch das Federelement 13 unter einer Vorspannung steht. In der zweiten Position ist die Lenksäule 10 feststellbar, wofür eine Arretierungsvorrichtung 14 vorgesehen ist. Vorzugsweise wird das Federelement 13 elektromagnetisch entriegelt, wobei die Entriegelung über eine Steuerung erfolgen kann, die auch die Entfaltung des Airbags auslöst. Diese Arretierungsvorrichtung 14 weist vorzugsweise ein Solenoid auf, mit dessen Hilfe die Arretierung schnell gelöst werden kann. Sobald die Arretierung gelöst ist, drückt das Federelement 13 die Lenksäule 10 mit dem Lenkrad 11 in die gewünschte Position des manuellen Lenkens, in der der Aufprall des Fahrers in den Airbag erfolgt.

Sobald das Lenkrad 11 ausgefahren und in der gewünschten, der ersten Position ist, wird die Lenksäule 10 wiederum arretiert, wodurch die durch den Fahrer beim Eintauchen in den Airbag aufgebrachte Energie abgebaut werden kann. Mit der Arretierung der Lenksäule 10 in der ersten Position ist die Lenksäule 10 im Wesentlich in ihrer Längserstreckung unbeweglich in der Armaturentafel 12 angeordnet, weshalb sie für den Airbag einen ausreichenden Widerstand bietet.

In der Fig. 3 ist der Aktor in Form eines Stellgliedes, vorzugweise als ein Pneumatik- oder Hydraulikzylinder 15 ausgebildet. Der Pneumatik- oder Hydraulikzylinder weist üblicherweise ein Gas- oder Hydraulikreservoir auf, zur Speicherung eines Gases bzw. einer Hydraulikflüssigkeit. Bei einem Unfall wird durch den Pneumatik- oder Hydraulikzylinder 15 die mit diesem verbundene Lenksäule 10 aus der Armaturentafel 12 herausgeschoben, wobei die Lenksäule 10 vorzugsweise als Kolben des Pneumatik- oder Hydraulikzylinders 15 ausgebildet ist. Die Lenksäule 10 kann aber auch durch einen eigenen Kolben des Pneumatik- oder Hydraulikzylinders 15 bewegt werden. Eine Druckkraft des Pneumatik- oder Hydraulikzylinders 15 ist derart bemessen, dass das Lenkrad 11 in der notwendigen Zeit von der zweiten Position in die erste Position gebracht wird. Durch in dem Zylinder 15 anstehenden Druck kann auf eine separate Arretierungsvorrichtung 14 verzichtet werden.

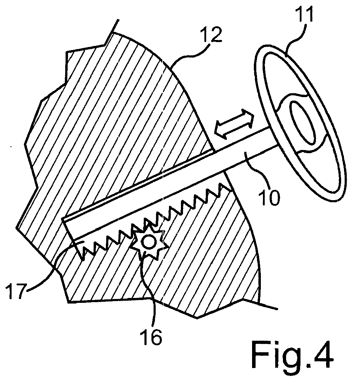

Weiter ist der Aktor nach einem weiteren Ausführungsbeispiel, welches in der Fig. 4 dargestellt ist, als ein Elektromotor ausgebildet, der im Bereich der Lenksäule 10 angeordnet ist. Mit dem Elektromotor ist über eine Welle ein Ritzel 16 verbunden, das mit einer Zahnstange 17 kämmt, die an der Lenksäule 10 angeordnet ist. Durch Betätigen des Elektromotors kann die Lenksäule 10 bei einem Unfall durch Rotation des Ritzels 16 in die erste Position gefahren werden. In dieser Position kann die Lenksäule 10 ebenfalls festgestellt werden, in dem der Elektromotor festgestellt wird

Auch kann der Elektromotor als ein Linearmotor ausgebildet sein, der entlang der Lenksäule 10 angeordnet ist. Der Linearmotor wird bei einem Unfall aktiviert, so dass sich der bewegliche Teil der Lenksäule 10 relativ zu einem feststehenden Teil der Lenksäule 10 bewegt. Bei dieser und der vorstehenden Ausführungsform muss die Lenksäule 10 nicht notwendigerweise durch eine Vorrichtung arretiert werden, sobald die gewünschte Position erreicht ist, kann die Lenksäule durch die elektrische Spannung in der gewünschten Position gehalten werden. Eine Arretierung kann vorzugsweise zusätzlich vorgesehen sein.

In einer weiteren Ausführungsform ist der Aktor als ein Pyroelement vorgesehen, durch das der bewegliche Teil der Lenksäule 10 bei einem Unfall ausgefahren wird. Ähnlich einem Pyroelement eines Airbags, schießt das Pyroelement der Lenksäule 10 den beweglichen Teil in die gewünschte Position. Sobald das Lenkrad 11 die gewünschte Unfallposition erreicht hat, wird die Lenksäule 10 wieder arretiert und bietet ein ausreichendes Widerlager für den Airbag.

Bei einem Unfall wird zur Betätigung einiger der Aktoren Energie benötigt, weshalb dem Aktor vorzugsweise ein eigener Energiespeicher beigeordnet ist. Dieser kann beispielsweise in Form eines Kondensators vorliegen, der genügend Energie speichert, um den Elektromotor oder eine Pumpe des Hydraulikzylinders 15 mit Energie zu versorgen. Der Aktor ist damit von einem Bordnetz unabhängig, was gerade auch bei schweren Unfällen leicht beschädigt werden kann.

Zudem ist der Aktor mit einem Unfallsensor bzw. einer Ansteuervorrichtung verbunden, die ein Signal erzeugt, sollte das Fahrzeug einen Unfall, vorzugsweise einen Frontalunfall, haben. Der Unfallsensor bzw. die Ansteuervorrichtung ist derart ausgebildet, dass durch das Signal die Lenksäule 10 verschoben wird bzw. das Lenkrad 11 aus der zweiten in die ersten Position verschoben wird.

Neben der Arretierung kann die Lenksäule 10 auch derart ausgelegt sein, dass zumindest ein Teil von der Lenksäule 10 durch die Aufprallenergie nachgibt. Dabei verschiebt sich die Lenksäule 10 zumindest zum Teil in ihrer Längserstreckung. Vorzugsweise bei den Ausführungsbeispielen eines Linearmotors und des Zylinders ist eine Kombination mit den nachgiebigen Teilen der Lenksäule 10 möglich. Dabei ist die von diesen Aktoren auf die Lenksäule 10 ausgeübte Kraft derart bemessen, dass sie die Verschiebung der Lenksäule durch die Aufprallenergie zulassen.

Die Lenksäule 10 kann wie oben beschrieben zudem einerseits mit einem Teil arretiert werden, nach dem sie in die jeweilige Position verschoben wurde und kann mit einem anderen Teil immer noch nachgiebig gestaltet sein, so dass eine Kombination beider Systeme möglich ist.

## Patentansprüche

1. Kraftfahrzeug mit einer Instrumententafel (12) und einem auf einer Lenksäule (10) angeordneten Lenkrad (11), das im Bereich der Instrumententafel (12) angeordnet ist, wobei das Lenkrad (11) relativ zur Instrumententafel (12) beweglich ist und in einer Längsrichtung der Lenksäule (10) in Richtung der Instrumententafel (12) in einem Automodus des Kraftfahrzeugs von einer ersten Position des manuellen Lenkens in eine zweite zurückgezogene Position des automatischen Lenkens verschiebbar ist, wobei
bei einer unfallbedingten Kraftbeaufschlagung des Kraftfahrzeugs die Lenksäule (10) derart ausgebildet ist, dass das Lenkrad (11) aus der zweiten Position in die erste Position verschoben wird, wobei die Lenksäule (10) mit einem Aktor gekoppelt ist, der dazu ausgelegt ist, das Lenkrad (11) aus der zweiten Position in die erste Position zu verschieben,
**dadurch gekennzeichnet, dass**
der Aktor eine Federeinrichtung (13) aufweist, die in der zweiten Position des Lenkrads (11) unter einer Vorspannung steht und im Fall des Unfalls entriegelbar ist.

2. Kraftfahrzeug nach Anspruch 1,
**dadurch gekennzeichnet, dass**
das Lenkrad (11) aus der zweiten Position in die erste Position innerhalb einer Zeitspanne verschiebbar ist, die insbesondere einer Zeit entspricht, in der ein in dem Lenkrad (11) integrierter Airbag zur wenigstens teilweisen Entfaltung benötigt.

3. Kraftfahrzeug nach wenigstens einem der vorstehen Ansprüche,
**dadurch gekennzeichnet, dass**
das Lenkrad (11) in einer Zehntelsekunde und weniger, bevorzugt innerhalb von 10 bis 100 Millisekunden, besonders bevorzugt innerhalb von 20 bis 50 Millisekunden, von der zweiten in die erste Position verschiebbar ist.

4. Kraftfahrzeug nach wenigstens einem der vorstehenden Ansprüche,
**dadurch gekennzeichnet, dass**
wenigstens eine Arretierungsvorrichtung (14) im Bereich der Lenksäule (10) vorgesehen ist, durch die die Lenksäule (10) in einer Endposition, insbesondere der ersten Position, feststellbar, insbesondere arretierbar ist.

5. Kraftfahrzeug nach wenigstens einem der vorstehenden Ansprüche 1 bis 3,
**dadurch gekennzeichnet, dass**
in der ersten Position die Lenksäule (10) oder zumindest ein Teil der Lenksäule (10) nachgiebig gelagert ist.

## Claims

1. Motor vehicle having a dashboard (12) and a steering wheel (11) arranged on a steering column (10), said steering wheel being arranged in the region of the dashboard (12), wherein the steering wheel (11) is moveable relative to the dashboard (12) and is displaceable in a longitudinal direction of the steering column (10) in the direction of the dashboard (12) in an automatic mode of the motor vehicle from a first position of the manual steering into a second retracted position of the automatic steering, wherein in the case of an accidental force impact of the motor vehicle, the steering column (10) is formed in such a way that the steering wheel (11) is displaced from the second position into the first position, wherein the steering column (10) is coupled to an actuator, which is designed to displace the steering wheel (11) from the second position into the first position,
**characterised in that**
the actuator has a spring device (13) which is subject to a prestressing in the second position of the steering wheel (11) and is able to be unlocked in the case of an accident.

2. Motor vehicle according to claim 1,
**characterised in that**
the steering wheel (11) is displaceable from the second position into the first position within a time period which corresponds in particular to a time in which an airbag integrated into the steering wheel (11) requires for at least partial unfolding.

3. Motor vehicle according to at least one of the preceding claims,
**characterised in that**
the steering wheel (11) is displaceable in a tenth of a second and less, preferably within 10 to 100 milliseconds, particularly preferably within 20 to 50 milliseconds, from the second into the first position.

4. Motor vehicle according to at least one of the preceding claims,
**characterised in that**
at least one locking device (14) is provided in the region of the steering column (10), through which the steering column (10) is able to be fixed, in particular is able to be locked, in an end position, in particular the first position.

5. Motor vehicle according to at least one of the preceding claims 1 to 3,
**characterised in that**,
in the first position, the steering column (10) or at least one part of the steering column (10) is mounted flexibly.

## Revendications

1. Véhicule automobile avec un tableau de bord (12) et un volant (11) agencé sur une colonne de direction (10) qui est agencé dans la zone du tableau de bord (12), dans lequel le volant (11) est mobile par rapport au tableau de bord (12) et peut être déplacé dans un sens longitudinal de la colonne de direction (10) en direction du tableau de bord (12) dans un mode automatique du véhicule automobile d'une première position de la direction manuelle à une seconde position retirée de la direction automatique, dans lequel
en cas de sollicitation de force due à un accident du véhicule automobile, la colonne de direction (10) est réalisée de telle manière que le volant (11) soit déplacé de la seconde position à la première position, dans lequel la colonne de direction (10) est couplée à un actionneur qui est conçu pour déplacer le volant (11) de la seconde position à la première position,
**caractérisé en ce que**
l'actionneur présente un dispositif de ressort (13) qui est sous précontrainte dans la seconde position du volant (11) et peut être déverrouillé en cas d'accident.

2. Véhicule automobile selon la revendication 1,
**caractérisé en ce que**
le volant (11) peut être déplacé de la seconde position à la première position dans un intervalle qui correspond en particulier à un temps que nécessite un airbag intégré dans le volant (11) pour un déploiement au moins partiel.

3. Véhicule automobile selon au moins une des revendications précédentes,
**caractérisé en ce que**
le volant (11) peut être déplacé en un dixième de seconde et moins, de préférence en 10 à 100 millisecondes, de manière particulièrement préférée en 20 à 50 millisecondes, de la seconde à la première position.

4. Véhicule automobile selon au moins une des revendications précédentes,
**caractérisé en ce que**
au moins un dispositif d'arrêt (14) est prévu dans la zone de la colonne de direction (10) au travers duquel la colonne de direction (10) peut être fixée, en particulier arrêtée dans une position d'extrémité, en particulier dans la première position.

5. Véhicule automobile selon au moins une des revendications précédentes 1 à 3,
**caractérisé en ce que**
dans la première position, la colonne de direction (10) ou au moins une partie de la colonne de direction (10) est logée de manière flexible.
